# EUROPÄISCHE PATENTANMELDUNG

(11) **EP 1 428 635 A1**
(43) Veröffentlichungstag der Anmeldung: **16.06.2004**
(21) Anmeldenummer: 02007274.0
(22) Anmeldetag: 02.04.2002
(51) Int. Cl.: B26B 11/00, G01S 1/04, G01C 21/20

(54) **Messer mit GPS Empfänger**

(30) Priorität: 02.04.2001 CH 613012001
(71) Anmelder: Nemerix SA, 6928 Manno (CH)
(72) Erfinder: RIVA, Filippo, 6900 Lugano (CH)
(74) Vertreter: Saam, Christophe

(57) **Zusammenfassung**

Ein multifunktionelles Messer (1), inbesondere ein Taschenmesser (1), zur Orientierung an abgelegenem Orten wie beispielsweise beim Wandern, weist einen GPS-Empfänger (15) mit Antenne (19), eine Auswerteelektronik (16), eine Anzeigeeinheit (10;10a), eine Eingabeeinheit (11;11a,11b,11c) sowie Energieversorgungselemente (18,20,21) wie eine Batterie (20), einen Akkumulator (21) oder auch Solarzellen (18) auf. Bevorzugte Ausführungsformen sind beispielsweise, dass die Anzeigeeinheit (10;10a) und Eingabeeinheit (11;11a,11b,11c) auf einer inneren Oberfläche (7a) eines auf- und zuklappbaren Dekkels (3,4) oder an einem aus- und einklappbaren Element (24) des Messergriffes (2,3,4) angeordnet sind. Das erfindungsgemässe Messer (1) ermöglicht eine verbesserte Orientierung im Gelände und ist aufgrund der Integration mehrerer Funktionen einfach handhabbar.

## Beschreibung

Die Erfindung betrifft ein multifunktionelles Messer gemäss dem Oberbegriff von Anspruch 1. Zur Orientierung im Gelände sind Messer bekannt, welche mit einem Kompass wie z.B. in US 5,313,376 ausgestattet sind. Mit dem Kompass können aber nur die Himmelsrichtungen bestimmt werden. Vor allem an unwegsamen oder abgelegenen Orten wie beispielsweise beim Camping, Wandern, Trecken ist dies als Orientierungshilfe nicht ausreichend. Vor diesem Hintergrund stellt sich die Aufgabe, das Messer der eingangs erwähnten Art derart zu verbessern, dass eine verbesserte Orientierung im Gelände möglich ist. Diese Aufgabe wird durch den unabhängigen Anspruch gelöst.

Ein multifunktionelles Messer mit einem Griff, welches einen GPS-Empfänger mit Antenne, eine Auswerteelektronik, mindestens eine Anzeigeeinheit sowie mindestens ein Energieversorgungselement aufweist, ermöglicht weltweit eine präzise Orientierung, sei dies beispielsweise beim Camping im Gelände oder auch in einer Stadt. Zudem weist ein Messer, insbesondere ein kleines, handliches Messer, wie beispielsweise ein Taschenmesser, den Vorteil auf, dass es mit einem GPS ausstattbar ist und trotzdem immer noch genügend Fläche zur Anordnung flächenintensiver Elemente wie beispielsweise einer Anzeigeeinheit bietet.

Neben einer Anzeigeeinheit weist der Griff wahlweise auch mindestens eine Eingabeeinheit auf. Dadurch sind auf einfache Weise beispielsweise Zielkoordinaten R' eines Reisezieles R eingebbar, so dass das GPS die Wegrichtung ausgehend von einem momentanen Standort A zu einem gewünschten Reiseziel R angeben kann.

Die Anzeigeeinheit und/oder die Eingabeeinheit und/oder das Energieversorgungselement befinden sich bevorzugt an einer Aussenfläche des Griffes und/oder im Griff des Messers. Die Anordnung der Elemente im Griff gewährleistet eine sichere Unterbringung, beispielsweise gegen Beschädigung. Zudem sind Daten nicht unabsichtlich über die Eingabeeinheit eingebbar, wenn das Messer für einen anderen Zweck wie beispielsweise zu Schneidzwecken verwendet wird. Dahingegen ermöglicht die Anordnung an der Aussenfläche eine rasche Bedienbarkeit beziehungsweise Ablesbarkeit von Informationen.

Der GPS-Empfänger mit Antenne sowie die Auswerteelektronik sind bevorzugt im Griff angeordnet.

Der Griff des Messers weist vorzugsweise mindestens ein Fach zur Aufnahme eines oder mehrerer der im Griff angeordneten Elemente auf, wobei ein solches Fach durch mindestens einen Deckel verschliessbar ist. Ein Aufnahmefach ist von Vorteil, da ein Element auf diese Weise leicht austauschbar und/oder reparierbar ist.

Es besteht ausserdem die Möglichkeit, die Eingabeeinheit und/oder die Anzeigeeinheit und/oder das Energieversorgungselement aus dem Griff aus- und einzuklappen oder auf einer inneren Oberfläche eines auf-und zuklappbaren Deckels anzuordnen. Über die Auf- und Zuklappbarkeit des Deckels beziehungsweise über die Aus - und Einklappbarkeit von Elementen können zusätzlich zur Aussenfläche weitere Flächen erschlossen werden, welche beispielsweise zur Anordnung flächenintensiver Elemente wie einer Solarzelle dienen können.

Vorzugsweise wird mindestens eine Batterie und/oder Akkumulator und/oder Solarzelle als Energieversorgungselement verwendet. Es sind aber auch andere geeignete Energieversorgungselemente denkbar. Eine Batterie ist besonders zur Energieversorgung geeignet, da diese heutzutage klein und somit ideal auch in kleinere Messer einlegbar ist. Gegenüber einem Akkumulator zeigt eine Batterie bekanntlich den Nachteil, nach einmaligem Gebrauch entsorgt werden zu müssen, wohingegen ein Akkumulator z.B über das Stromnetz wiederaufladbar ist. Weist das Messer Solarzellen auf, so kann beispielsweise der Akkumulator über die Solarzellen wieder aufgeladen werden. Im Gegensatz zu nur einem Energieversorgungselement sind mehrere im Messer integrierbare Energieversorgungselemente wie beispielsweise ein Akkumulator und eine Batterie vorteilhaft, da, falls die Energie des einen Energieversorgungselementes zu Neige geht, das andere Element weiterhin Energie liefern kann.

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Seitenansicht eines Taschenmessers nach einem Ausführungsbeispiel der Erfindung;
Fig. 2 eine perspektivische Ansicht des Messers nach Fig. 1 mit auf- und zuklappbarem Deckel;
Fig. 3 eine Draufsicht des Messers nach Fig. 1 mit ein- und ausklappbarer Eingabeeinheit, Ausgabeeinheit und Solarzellen;
Fig. 4 eine Draufsicht des Messers nach Fig. 1; und
Fig. 5 eine Unteransicht des Messers nach Fig. 1.

Zunächst wird die Erfindung anhand einer Seitenansicht des erfindungsgemässen Messers dargestellt.

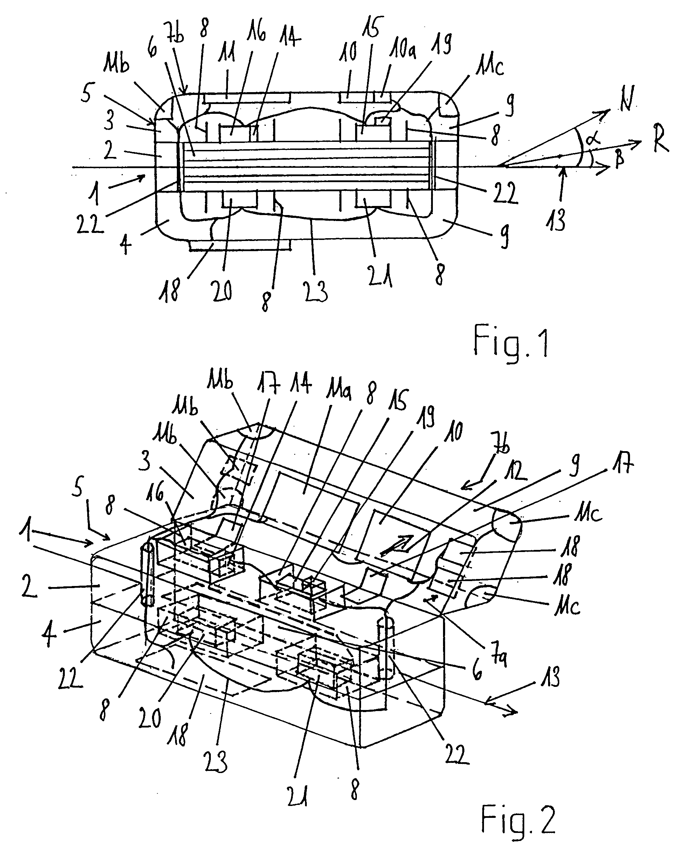

Fig. 1 zeigt ein Messer 1 mit einem Griff 2,3,4 bestehend aus einem Grundkörper 2, wobei am Grundkörper 2 ein oberer Deckel 3 und ein unterer Deckel 4 angeordnet sind, welche mindestens teilweise eine Aussenfläche 5 des Messers 1 bilden. Es ist oder sind auch nur ein Deckel 3,4 oder mehr als zwei Deckel 3,4 denkbar.

Das Messer 1 ist bevorzugt, wie in Fig. 1 dargestellt, als kleines, handliches Taschenmesser 1, insbesondere als Schweizer Taschenmesser 1, ausgestaltet. Die Grösse des Messers 1 ist aber nicht limitiert. So kann beispielsweise auch ein grosses Buschmesser mit einem GPS ausgestattet werden.

Der Grundkörper 2 wird beispielsweise gebildet durch mindestens eine ein- und ausklappbare Klinge 6 und/oder sonstigem ein- und ausklappbarem Zubehör (nicht dargestellt), wie dies beispielsweise vom Schweizer Taschenmesser 1 bekannt ist. Es sind auch Ausführungsformen des Messers 1 denkbar, bei denen die Klinge 6 und/oder das Zubehör nicht ein- und ausklappbar sind. In diesem Fall ist oder sind die Klinge 6 wie beispielsweise beim Buschmesser und/oder das Zubehör starr am Griff 2,3,4 angebracht.

Die Deckel 3,4 weisen eine innere Oberfläche 7a (s. Fig. 2) und eine äussere Oberfläche 7b auf, wobei die äussere Oberfläche 7b mindestens teilweise die Aussenfläche 5 des Messers 1 bildet. Ein solcher Deckel 3,4 ist am Messer 1 befestigt und dient zum Verschliessen eines Faches 8, in welchem beispielsweise ein Energieversorgungselement 20,21 einlegbar ist, welches so gegen Verschmutzung geschützt und leicht austauschbar ist.

Die Deckel 3,4 weisen vorzugsweise eine gewölbte Form mit einem Rand 9 auf. Ein solcher Deckel 3,4 kann auch eine beliebige Form aufweisen und die Abmessungen der Deckel 3,4, insbesondere des Randes 9, variieren entsprechend dem jeweiligen Messertyp. Bei einem Taschenmesser 1 kann die Randhöhe beispielsweise 3-4 mm betragen.

Die Deckel 3,4 bestehen beispielsweise aus Kunststoff, Metall oder einem anderen Material.

Auf dem oberen Deckel 3 oder, wie in Fig. 1 dargestellt, in dem oberen Deckel 3 des erfindungsgemässen Messers 1 eingelassen, sind eine Anzeigeeinheit 10;10a und eine Eingabeeinheit 11;11b,11c angeordnet. Anzeigeeinheit 10 wie auch Eingabeeinheit 11;11a (s. Fig. 2) können als LCD-Display 10;11,11a ausgestaltet sein. Der LCD-Display 11,11a einer Eingabeeinheit 11;11a kann als ein Touch-Screen 11a ausgestaltet sein, auf welchem Daten wie beispielsweise Ortskoordinaten R` eines Reiszieles R mittels Stift eingebbar sind. Selbstverständlich müssen Anzeigeeinheit 10 und Eingabeeinheit 11;11a nicht voneinander getrennt sein, sondern können auch nur eine einzige Einheit 10,11;11a wie z.B einen als Touch-Screen 11a ausgestalteter LCD-Disply 10,11;11a bilden. Die Anzeigeeinheit 10 und/oder die Eingabeeinheit 11;11a zeigen Daten numerisch und/oder graphisch an. Auf der Anzeigeeinheit 10 sind beispielsweise relevante Daten darstellbar, wie die Koordinaten A` des momentanen Standortes A oder ein Richtungspfeil 12 (s. Fig. 2), welcher in Richtung eines zu erreichenden Reisezieles R zeigt.

Die Eingabeeinheit 11;11a,11b,11c kann auch mindestens einen Knopf 11b und/oder ein Empfangselement 11c für einen IR-Link oder sonstige geeignete Eingabemittel umfassen, die zur Eingabe von Daten geeignet sind. Fig. 1 zeigt beispielhaft einen Knopf 11b und ein Empfangselement 11c für einen IR-Link als Eingabeeinheiten 11;11b,11c am Rand 9 des oberen Deckels 3. Das Empfangselement 11c für einen IR-Link erlaubt, dass beispielsweise Daten von einem datenverarbeitenden Gerät auf das Messer 1 beziehungsweise Daten vom Messer 1 auf ein datenverarbeitendes Gerät übertragbar sind. Ein datenverarbeitendes Gerät ist beispielsweise ein PC oder auch ein Mobilfunktelefon. Der Rand 9 eines Deckels 3,4 bietet sich gut zur Anordnung einer Eingabeeinheit 11;11b,11c an, da dadurch ein grösserer Flächenteil des Deckels 3,4 durch beispielsweise ein Anzeigeeinheit 10;10a beanspruchbar ist.

Die Richtung des Richtungspfeiles 12, welcher auf der Anzeigeeinheit 10 dargestellt ist, wird wie folgt bestimmt: Zuerst werden die Koordinaten R` des Reisezieles R, über die Eingabeeinheit 11;11a,11b,11c des Messers 1 eingegeben. Danach bewegt sich der Benutzer vom momentanen Standort (Punkt A) zu einem zweiten Standort (Punkt B). Nach Bestimmung der Ortskoordinate A' an Punkt A und Ortskoordinate B' an Punkt B ist die Auswerteelektronik 16 in der Lage, durch Differenzbildung B'-A' der Ortskoordinaten die Himmelsrichtung, in welcher Punkt A relativ zu Punkt B liegt, zu bestimmen. Aufgrund der errechneten Himmelsrichtung, der Ortskoordinate B` von Punkt B sowie der Koordinate R' des Reiszieles R kann die Auswerteelektronik 16 auf der Anzeigeeinheit 10 anzeigen, in welcher Richtung das Reiseziel R relativ zu einer Messerachse 13 liegt. Die Anzeige der Reisezielrichtung kann beispielsweise in Form eines Richtungspfeiles 12 und/oder durch über einen Winkelbereich verteilte Leuchtdioden 10a oder auf eine andere geeignete Weise erfolgen. Hierfür wird eine beliebige Messerachse 13, vorzugsweise die Längsachse 13, unter einem fix vorgegebenen Winkel, beispielsweise 0° bezüglich der Strecke A nach B, ausgerichtet.

Wird ausgehend vom Punkt B eine weitere Wegstrecke zu einem Punkt C zurückgelegt, so bestimmt das GPS wiederum die Himmelsrichtung der Strecke von B zu C sowie die Reisezielrichtung zum Reiseziel R bezüglich der Messerachse 13 am Punkt C. Die vorangehend beschriebenen Messungen können periodisch und in kurzen Abständen erfolgen, so dass Wegabweichungen zum gewünschten Reiseziel R schnell feststellbar sind.

Zusätzlich zu einem GPS kann das Messer 1 auch ein Kompassmittel 14 aufweisen, wobei die Reisezielrichtung beispielsweise dann auch wie folgt bestimmbar ist: Über den GPS-Empfänger 15 werden die Koordinaten A` des momentanen Aufenthaltsortes A (Punkt A) und über das Kompassmittel 14 zum Beispiel die Himmelsrichtung Norden bestimmt. Aus diesen Daten berechnet die Auswerteelektronik 16 den Winkel α zwischen einer beliebigen Messerachse 13 und der Himmelsrichtung Norden sowie den Winkel β zwischen Messerachse 13 und der Strecke von Punkt A zum Reiseziel R, wobei über den Winkel β sich die Reisezielrichtung, beispielsweise mittels Richtungspfeil 12 auf der Anzeigeeinheit 10 relativ zur Messerachse 13 darstellen lässt. Durch die Einführung eines Kompassmittels 14 im Messer 1 zeigt ein Richtungspfeil 12, unabhängig von der Ausrichtung der Messerachse 13, immer in die Reiszielrichtung. Alternativ zur Darstellung mit einem Richtungspfeil 12 kann bei einem einen Kompass 14 enthaltenden Messer 1 die Reisezielrichtung zusätzlich oder auch separat mittels mindestens einer Leuchtdiode 10a als Anzeigeeinheit 10a angezeigt werden, welche beispielsweise aufleuchtet, sobald die als massgeblich benannte Messerachse 13, wie zum Beispiel die Längsachse 13, auf das gewünschte Reiseziel R ausgerichtet ist.

Am Grundkörper 2 ist mindestens ein Fach 8 oder eine anderes Mittel angeordnet, welches durch den oberen und den unteren Deckel 3,4 verschliessbar ist. Unter dem oberen Deckel 3 sind beispielsweise in einem oder mehreren Fächern 8 die Auswerteelektronik 16, der GPS-Empfänger 15 mit Antenne 19 oder auch andere elektronische Bauteile angeordnet.

Die Antenne 19 ist zum Beispiel eine "Patch-Antenne" d.h. eine quadratisch, leitende Fläche mit Einkerbungen die zur Polarisierung der "Patch-Antenne" dienen. Die "Patch-Antenne" weist mindestens eine Fläche von ≥ 1 x 1 mm² auf und ist auf einem Keramikboard mit einer Fläche von beispielsweise 12 x 12 mm² angebracht. Selbstverständlich sind auch andere Antennentypen denkbar, welche geeignet sind, GPS- oder auch andere Signale zu empfangen.

Ausserdem ist am Grundkörper 2 auch mindestens ein Fach 8 angebracht, das zur Aufnahme eines Energieversorgungselementes 20,21, wie beispielsweise einer Batterie 20 und/oder eines Akkumulators 21 oder andere Bauteile und durch den unteren Deckel 4 verschliessbar ist. Auf der äusseren Oberfläche 7b des unteren Deckels 4 oder darin eingelassen können Solarzellen 18 angeordnet sein. Diese dienen beispielsweise zum Aufladen des Akkumulators 21 oder zur unmittelbaren Energieversorgung der Auswerteelektronik 16, der Anzeigeeinheit 10;10a, der Eingabeeinheit 11;11a,11b,11c sowie des GPS-Empfängers 15 mit Antenne 19. Im Grundkörper 2 ist zudem mindestens eine Bohrung 22 vorgesehen, die sich mindestens teilweise durch den gesamten Grundkörper 2 erstreckt. Diese dient zur Durchführung von Leitungen 23 zur Energie- und/oder Datenübertragung. Die Leitungen 23 verbinden die Energieversorgungselemente 18,20,21, wie beispielsweise die Batterie 20, welche in einem Fach 8 unter dem unteren Deckel 4 angeordnet ist, und die Energie benötigenden Elemente 10;10a,11;11a,11c,15,16,19 wie beispielsweise der sich unter dem oberen Deckel 3 befindende GPS-Empfänger 15 mit Antenne 19.

Der obere und der untere Deckel 3,4 sind lösbar am Grundkörper 2 befestigt, d. h. ein Deckel 3,4 ist beispielsweise über ein Steckverbindung (nicht dargestellt) am Grundkörper 2 befestigt und kann von diesem abgelöst und an diesen wieder angebracht werden.

Es ist aber auch eine Ausführungsform des Messers 1, wie in Fig. 2 dargestellt, denkbar. Bei dieser Ausführungsform ist der obere Deckel 3 und/oder der untere Deckel 4 auf- und zuklappbar. Zu diesem Zweck wird ein Deckel 3,4 über ein Scharnier 17 oder über ein dafür geeignetes Mittel am Messer 1 gehalten. Die Eingabeeinheit 11;11a,11b,11c und/oder die Anzeigeeinheit 10;10a und/oder ein Energieversorgungselement 18,20,21 wie Solarzellen 18 können zusätzlich zur Aussenfläche 5 auch oder nur im Griff 2,3,4 des Messers 1, wie beispielsweise auf der inneren Oberfläche 7a des Deckels 3,4 angeordnet sein.

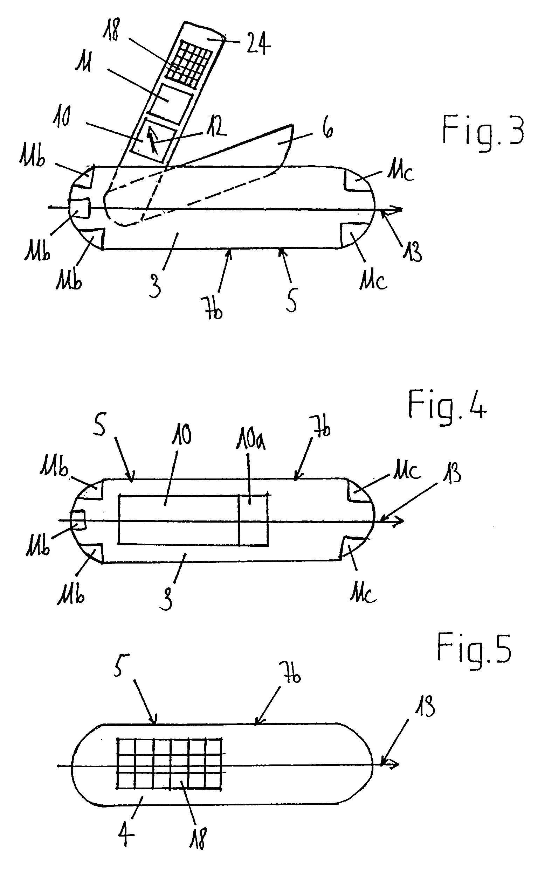

In einer weiteren Ausführungsform des Messers 1 kann die Anzeigeeinheit 10;10a und/oder die Eingabeeinheit 11;11a,11b,11c oder auch das Energieversorgungselement 18,20,21 aus dem Griff 2,3,4 ein- und ausklappbar sein. Fig. 3 zeigt ein Beispiel bei dem eine aus dem Grundkörper 2 ein- und ausklappbare Klinge 6 durch ein ein- und ausklappbares Element 24 ersetzt ist, auf dem, wie gezeigt, eine Anzeigeeinheit 10 und eine Eingabeeinheit 11a sowie Solarzellen 18 angeordnet sind. Analog zu einem Deckel 3,4, gewährleistet die Ein- und Ausklappbarkeit von Elementen 10;10a,11;11a,11b,11c,18,20,21 unter anderem auch einen Schutz vor Beschädigung. Ein weiterer Vorteil besteht z.B auch darin, dass durch den Austausch weiterer Klingen 6 mit Elementen 24 die verfügbare Fläche beispielsweise für Solarzellen 18 erhöhbar ist.

In Fig. 4 sind auf dem oberen Deckel 3 eine Anzeigeeinheit 10;10a sowie Knöpfe 11b und zwei Empfangselemente 11c für einen IR-Link als spezifische Beispiele einer Eingabeeinheit 11;11a,11b,11c dargestellt.

Fig. 5 zeigt Solarzellen 18, die an der Unterseite des Messers 1 angebracht sind.

Grundsätzlich können mindestens die vorangehend beschriebenen Elemente 6,8,10;10a,11;11a,11b,11c,14-23 auf beliebige Weise im und / oder am Griff 2,3,4 angeordnet sein. So ist es beispielsweise auch möglich, dass sich der GPS-Empfänger 15 mit Antenne 19, die Anzeige - und die Eingabeeinheit 10;10a,11;11a,11b,11c, die Auswerteelektronik 16 sowie die Energieversorgungselemente 18,20,21 oder sonstige Bauteile zusammen und nur unter einem einzigen Deckel 3,4 befinden.

Selbstverständlich können die Energieversorgungselemente 18,20,21 auch ausserhalb des Messers 1 angeordnet werden. So kann beispielsweise ein mit einem Deckel 3,4 verschliessbares Fach 8 mit Batterie 20 über eine Steckverbindung mit dem Messer 1 lösbar verbunden werden, um so die Energieversorgung des GPS zu gewährleisten.

Auch herkömmliche Messer 1 können mit einem GPS ausgerüstet werden, indem zumindest die vorangehend beschriebenen Elemente 15,16,18-21 eingebaut werden.

## Patentansprüche

1. Ein multifunktionelles Messer (1) mit einem Griff (2,3,4), insbesondere für Freizeit- und Campingzwecke, **dadurch gekennzeichnet, dass** das Messer (1) zur Orientierung im Gelände einen GPS-Empfänger (15) mit Antenne (19), eine Auswerteelektronik (16) und mindestens ein Anzeigeeinheit (10;10a) sowie mindestens ein Energieversorgungselement (18,20,21) aufweist.

2. Messer nach Anspruch 1, **dadurch gekennzeichnet, dass** der Griff (2,3,4) mindestens eine Eingabeeinheit (11;11a,11b,11c) zur Eingabe von Ortskoordinaten aufweist.

3. Messer nach Anspruch 2, **dadurch gekennzeichnet, dass** der Griff (2,3,4) eine Aussenfläche (5) aufweist, wobei die Anzeigeeinheit (10;10a) und/oder die Eingabeeinheit (11;11a,11b,11c) und/oder das Energieversorgungselement (18,20,21) an der Aussenfläche (5) des Griffes (2,3,4) und/oder im Griff (2,3,4) angeordnet sind.

4. Messer nach einem der Ansprüche 2-3, **dadurch gekennzeichnet, dass** die Eingabeeinheit (11;11a, 11b,11c) und/oder die Anzeigeeinheit (10;10a) und/oder das Energieversorgungselement (18,20,21) aus dem Griff (2,3,4) aus- und einklappbar sind.

5. Messer nach einem der vorangehenden Ansprüche, **dadurch gekennzeichnet, dass** der GPS-Empfänger (15) mit Antenne (19) und die Auswerteelektronik (16) im Griff (2,3,4) angeordnet sind.

6. Messer nach einem der vorangehenden Ansprüche, **dadurch gekennzeichnet, dass** der Griff (2,3,4) mindestens ein Fach (8) zur Aufnahme des GPS-Empfängers (15) mit Antenne (19), der Auswerteelektronik (16), der Anzeigeeinheit (10;10a) und/oder des Energieversorgungselementes (18,20,21) aufweist.

7. Messer nach Anspruch 6, **dadurch gekennzeichnet, dass** der Griff (2,3,4) mindestens einen Deckel (3,4) mit einer inneren (7a) und einer äusseren Oberfläche (7b) zum Verschliessen des Faches (8) aufweist und die äussere Oberfläche (7b) des Deckels (3,4) einen Teil der Aussenfläche (5) des Griffes (2,3,4) bildet.

8. Messer nach Anspruch 7, **dadurch gekennzeichnet**, der Deckel (3,4) auf- und zuklappbar ist und dass die Eingabeeinheit (11;11a,11b,11c) und/oder die Anzeigeeinheit (10;10a) und/oder das Energieversorgungselement (18,20,21) an der inneren Oberfläche (7a) des Dekkels (3,4) angeordnet ist oder sind.

9. Messer nach Anspruch 2 und einem der Ansprüche 7-8, **dadurch gekennzeichnet**, der Deckel (3,4) eine gewölbte Form mit einem Rand (9) aufweist, und die Eingabeeinheit (11;11b,11c) an dem Rand (9) angeordnet ist.

10. Messer nach einem der Ansprüche 2-9, **dadurch gekennzeichnet, dass** die Anzeigeeinheit (10) und/oder die Eingabeeinheit (11;11a) ein LCD-Display (10;11,11a) ist oder sind.

11. Messer nach Anspruch 10, **dadurch gekennzeichnet, dass** der LCD-Display (10,11;11a) ein Touch-Screen (11a) ist.

12. Messer nach einem der Ansprüche 2-11, **dadurch gekennzeichnet, dass** die Eingabeeinheit (11;11a,11b,11c) mindestens einen Knopf (11b) umfasst.

13. Messer nach einem der Ansprüche 2-12, **dadurch gekennzeichnet, dass** das Messer (1) als Eingabeeinheit (11;11a,11b,11c) ein Empfangselement (11c) für einen IR-Link aufweist.

14. Messer nach einem der vorangehenden Ansprüche, **dadurch gekennzeichnet, dass** das Energieversorgungselement (18,20,21) ein Akkumulator (21) und/oder eine Batterie (20) und/oder eine Solarzelle (15) ist.

15. Messer nach einem der vorangehenden Ansprüche, **dadurch gekennzeichnet, dass** die Auswerteelektronik (16) zur Bestimmung einer Ortskoordinate A` an Punkt A und einer Ortskoordinate B' an Punkt B, zur Differenzbildung von Ortskoordinaten A` und B` für die Bestimmung einer Himmelsrichtung einer Strecke von A nach B, zur Berechnung einer Reisezielrichtung von Punkt B zu einem vorgebbaren Reiseziel R mit Ortskoordinate R' und zur Anzeige der Reisezielrichtung auf der Anzeigeeinheit (10;10a) relativ zu einer bezüglich der Strecke von A nach B ausgerichteten Messerachse (13) ausgestaltet ist.

16. Messer nach Anspruch 15, **dadurch gekennzeichnet, dass** die Messerachse (13) die Längsachse (13) des Messers (1) ist und insbesondere dass die Auswerteelektronik (16) derartig ausgestaltet ist, dass die Reisezielrichtung bei Ausrichtung der Längsachse (13) parallel zur Strecke von A nach B auf der Anzeigeeinheit (10;10a) ablesbar ist.

17. Messer nach einem der Ansprüche 1-14, **dadurch gekennzeichnet, dass** das Messer (1) ein Kompassmittel (14) aufweist und die Auswerteelektronik (16) derartig ausgestaltet und mit dem Kompassmittel (14), dem GPS-Empfänger (15) und der Anzeigeeinheit (10;10a) wirkverbunden ist, dass sie aus vom Kompassmittel (14) und vom GPS-Empfänger (15) bereitgestellten Daten eine Ermittlung einer Reisezielrichtung und ein Anzeigen dieser Reisezielrichtung durch die Anzeigeeinheit (10;10a) ermöglicht.

18. Messer nach einem der Ansprüche 15-17, **dadurch gekennzeichnet, dass** ein Richtungspfeil (12) auf der Anzeigeeinheit (10) und/oder mindestens eine Leuchtdiode (10a) als Anzeigeeinheit (10a) die Reisezielrichtung anzeigt.

19. Messer nach einem der vorangehenden Ansprüchen, **dadurch gekennzeichnet, dass** das Messer (1) ein Taschenmesser (1), insbesondere ein Schweizer Taschenmesser ist (1).

20. Messer nach den Ansprüchen 7 und 19, **dadurch gekennzeichnet, dass** der Griff (2,3,4) des Messers (1) einen Grundkörper (2) aufweist, dass der mindestens eine Deckel (3,4) ein oberer Deckel und ein unterer Dekkel ist, die am Grundkörper (2) oben und unten angeordnet sind, wobei der Grundkörper (2) mindestens eine Bohrung (22) aufweist, die zur Durchführung von Leitungen (23) dient, welche das Energieversorgungselement (18,20,21) unter dem unteren Deckel (4) und mindestens ein Energie benötigenden Element (10,11,15,16,19) unter dem oberen Deckel (3) miteinander verbinden.
